# EUROPEAN PATENT APPLICATION

(11) **EP 3 037 654 A1**
(43) Date of publication of application: **29.06.2016**
(21) Application number: 14200038.9
(22) Date of filing: 23.12.2014
(51) Int. Cl.: F03B 13/26, E02B 17/00

(54) **Adaptive hydroelectric turbine system**

(71) Applicant: Openhydro IP Limited, Dublin 2 (IE)
(72) Inventor: DUNNE, Paul, Dublin, 9 (IE); DOYLE, Tom, Dublin, 6 (IE)
(74) Representative: O'Neill, Brian

(57) **Abstract**

The present invention provides an adaptive hydroelectric turbine system (10) comprising a base (14) for a hydroelectric turbine (12) or other electrical component, the base (14) having four ground contacting feet (24), at least one of which is displaceable relative to the remaining of the base (14) such as to ensure that all four feet (24) can contact the seabed to provide improved stability and load bearing capabilities.

## Description

### Field of the invention

The present invention is concerned with a hydroelectric turbine system, for example comprising a hydroelectric turbine mounted on and supported by a base for location on the seabed or other underwater substrate, the base including four ground contacting feet in order to provided improved support and stability to the system, the base additionally being adapted to ensure that all four of the feet contact the seabed.

### Background of the invention

Renewable energy has come to the fore in recent years, with many projects being developed around solar energy, wind energy, and tidal power. Of these alternative forms of energy, tidal power is arguably the most attractive, given that tidal flows are entirely predictable and constant, unlike wind or solar energy which are relatively intermittent and therefore less dependable.

However, harnessing tidal energy does provide its own challenges, in particular with respect to the installation and maintenance of tidal power generators, for example hydroelectric turbines, which by the very nature of operation must be located in relatively fast flowing tidal currents, and more than likely located on the seabed.

It is known to use a "gravity base" which is adapted to be lowered onto the seabed and to remain in position solely due to the weight or load of the combined base and turbine acting on the seabed through a number of seabed contacting feet or legs. A gravity base has the advantage of not requiring any site preparation works prior to deployment. However, during extreme conditions such a gravity base is susceptible to lateral sliding displacement. Such displacement may result in the turbine being incorrectly oriented relative to the prevailing tidal flow, thereby negatively impacting on the power generating capability of the turbine, or may in the event of significant displacement, result in damage to the cabling connecting the turbine to an onshore grid connection via which electrical power is taken from the turbine.

A favoured form of gravity base utilises a tripod arrangement having three ground contacting feet, the tripod design ensuring that all three feet will automatically contact the seabed, thus avoiding the need for any remedial operations following the initial deployment, in order to ensure that the feet are fully in contact with the seabed and thus functioning to bear the load of the system.

However in addition to the above extreme events, a large number of suitable tidal sites have what are known as "off axis" effects, meaning that the ebb and flow of the tide are not in direct opposition to one another. As a result the axis of rotation of the turbine may be aligned with the tide for one direction, but misaligned when the tide flows in the opposite direction. This may be problematic when using a tripod type base, as the three legs will generally be arranged/oriented to provide maximum stability when the tidal flow is coaxial with the axis of rotation of the turbine, meaning that when the tide changes direction and then flows "off axis" instability may arise.

In order to design a base for supporting the turbine which is capable of withstanding these types of issues and which will allow deployment at even more energetic sites, gravity bases are required to get bigger in order to be stable which in turn means the marine equipment needed to install the turbines gets bigger (larger deployment vessels, bigger winches, deeper draught needed at quaysides for mobilisation). This results in more weight which then means more ballast which adds material costs, in addition to increased costs for larger lifting and other equipment necessary to transport and deploy the systems. It is also more difficult to find existing equipment that can handle the increased sizes.

It is therefore an object of the present invention to overcome the above mentioned problems of the prior art.

### Summary of the invention

According to a first aspect of the present invention there is provided an adaptive hydroelectric turbine system comprising a base comprising four ground contacting feet; characterised in that at least one of the feet is displaceable relative to the base.

Preferably, displacement of the at least one foot is in the form of rotation and/or translation of the foot relative to the base.

Preferably, displacement of the at least one foot is facilitated by a coupling about which the at least one foot is displaceable.

Preferably, the coupling comprises a pivot.

Preferably, the coupling comprises a pivotless flexible member.

Preferably, the coupling is operable to undergo plastic deformation in order to facilitate the displacement of the at least one foot.

Preferably, the coupling is adapted to generate a reaction moment responsive to displacement of the at least one foot relative to the base.

Preferably, the coupling is adapted to temporarily enable displacement of the at least one foot relative to the base.

Preferably, the system comprises an immobiliser adapted to allow the at least one displaceable foot to be immobilised relative to the base.

Preferably, the immobiliser is defined by the coupling.

Preferably, the immobiliser comprises a curable component.

Preferably, a pair of feet are displaceable relative to the base while being fixed relative to one another.

Preferably, the base comprises a main frame on which at least a pair of the feet are provided, and a subframe on which the at least one displaceable foot is provided, the subframe being displaceable relative to the main frame.

Preferably, the subframe is displaceable about an axis which extends substantially perpendicular to an axis of rotation of a hydroelectric turbine when mounted to the base.

Preferably, the subframe is displaceable about an axis which extends substantially parallel to an axis of rotation of a hydroelectric turbine when mounted to the base.

Preferably, the subframe comprises a cross member pivotably mounted to the main frame and from which subframe the at least one displaceable foot extends.

Preferably, the base comprises four legs, a free end of each leg being defined by one of the ground contacting feet.

Preferably, the system comprises a restrictor operable to limit the range of movement of the at least one foot relative to the base.

Preferably, the restrictor is adapted to limit rotational displacement of the at least one foot.

According to a second aspect of the present invention there is provided a method of deploying a hydroelectric turbine system on a non uniform underwater surface, the method comprising the steps of:
lowering a base onto the underwater surface, the base having four ground contacting feet;
permitting at least one of the feet to be displaced relative to the base such that all of the feet contact the underwater surface.

Preferably, the method comprises, in the step of permitting displacement of at least one of the feet, permitting the at least one foot to rotate about an axis.

Preferably, the method comprises temporarily permitting displacement of at least one of the feet.

Preferably, the method comprises the step of immobilising the at least one displaceable foot, relative to the base, following contact of all of the feet with the underwater surface.

Preferably, the method comprises the step of permitting a curable component to set such as to immobilise the at least one displaceable foot.

As used herein, the term "hydroelectric turbine system" is intended to cover a system comprising a tidal turbine for the generation of electricity, and/or one or more electrical components for managing and/or conditioning the generation of electricity from one or more of such tidal turbines, and which turbine system may be mounted on a base for location on an underwater deployment substrate such as the seabed.

As used herein, the term "foot" is intended to mean a ground contacting load bearing element, and may be formed at the otherwise free end of a leg, whether integrally with the leg as a simple free end of the leg, or through some form of articulated connection allowing the foot to move relative to the leg, and may alternatively take the form of one or more spikes or similar ground penetrating elements.

As used herein, the term "coupling" is intended to mean a connection between two or more parts of a system, which coupling may incorporate two or more elements, rigid or otherwise, which are articulated relative to one another, in addition to a single flexible or otherwise deformable element which permits relative movement between the two parts of the system.

As used herein, the term "pivot" is intended to mean a conventional pivot defined by a single axis of rotation, in addition to a virtual pivot which may be defined by two or more physical pivot axes which together define a virtual pivot point, which may be fixed or movable, in addition to covering any other arrangement which allows rotation of one element relative to another.

As used herein, the term "temporarily" is intended to mean for a short period of time relative to the overall working life of a component which may be in use for years or decades, and for example may cover a period of hours or days.

### Brief description of the drawings

The present invention will now be described with reference to the accompanying drawings, in which;
Figure 1 illustrates a perspective view of a hydroelectric turbine system according to a preferred embodiment of the present invention;
Figure 2 illustrates a perspective view of an alternative embodiment of a hydroelectric turbine system according to the present invention;
Figure 3 illustrates a front elevation of the hydroelectric turbine system according to the embodiment illustrated in Figure 1;
Figure 4 illustrates a portion of the hydroelectric turbine system of Figure 3 showing an optional component which may be provided; and
Figure 5 illustrates one of four ground contacting feet forming part of the hydroelectric turbine system of the embodiment of either Figure 1 or Figure 2.

### Detailed description of the drawings

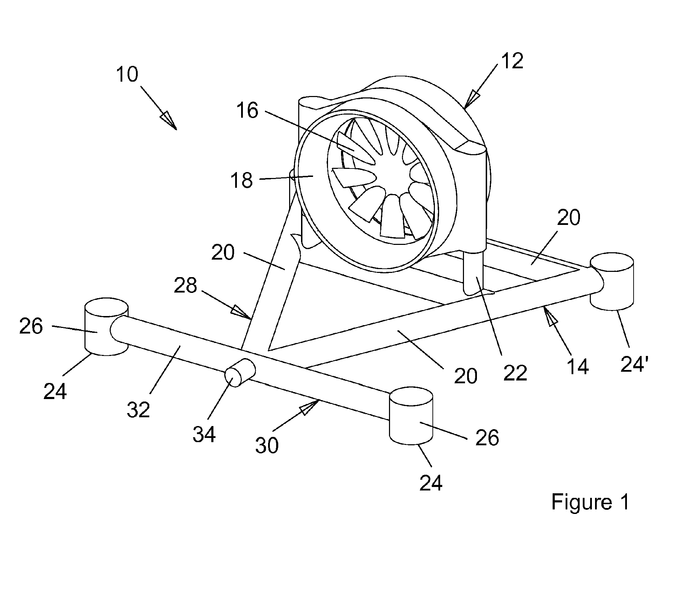

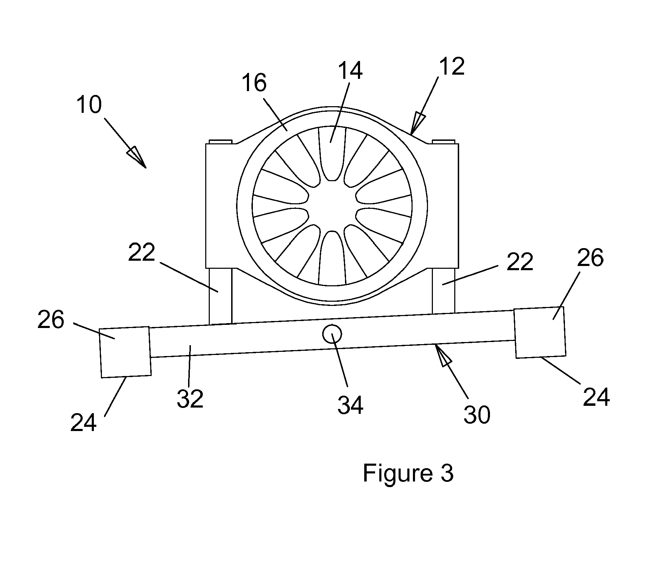

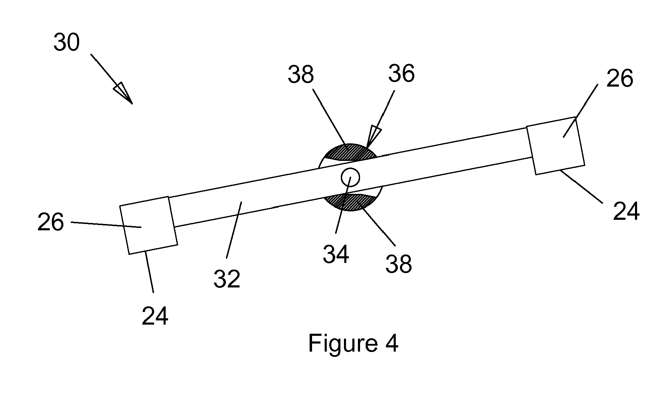

Referring now to Figures 1 and 3 to 5 of the accompanying drawings there is illustrated a hydroelectric turbine system according to an embodiment of the present invention, and generally indicated as 10. The hydroelectric turbine system 10 comprises a hydroelectric turbine 12 mounted on a gravity base 14 which is intended to be deployed onto the seabed or other underwater support substrate, in order to support the turbine 12 in a manner which permits the turbine 12 to generate electricity in response to the tidal flow of water through the turbine 12, preferably in a bidirectional manner. The invention is not however intended to be limited to use with a gravity base, although this is the preferred embodiment. The turbine 14 could also be omitted in place of one or more electrical components (not shown) for processing and/or conditioning electricity generated by one or more of the turbines 14, for example when provided in an array, and for the purposes of the following description and claims the term "turbine" should be construed as covering such components.

While the turbine 12 illustrated is of the type having a shaftless rotor housed within a stator for rotation relative thereto, it will be appreciated from the following description of the configuration and operation of the system 10 that the turbine 12 may be of any other suitable form, for example having a central support shaft, an exposed or non shrouded propeller type rotor, or any other suitable alternative. Similarly it will be appreciated that while the base 14 is shown of a particular configuration of interconnected frame members 20 carrying a pair of uprights 22 between which the turbine 12 may be mounted, it will be appreciated from the following description that the base 14 may be of any other suitable configuration once certain features and functionality are embodied therein, as hereinafter described, and the base 14 may be employed to carry hardware other than the turbine 12, for example one or more components (not shown) involved with the generation, conditioning, transmission, and distribution of electricity.

The base 14 comprises four ground contacting feet 24, 24' at least one of which, and in the embodiment illustrated a pair 24 of which are displaceable relative to the remainder of the base 14, and in particular relative to the remaining two fixed feet 24'. The ability of at least one of the feet 24 to be displaced relative to the remainder of the base 14 ensures that all four feet 24, 24' will contact the seabed or other underwater support substrate, in order to ensure that all four feet 24, 24' play a load bearing roll in supporting the turbine 12 and providing enhanced stability to the overall system 10, regardless of the presence of off axis or other destabilising effects such as extreme weather events or the like.

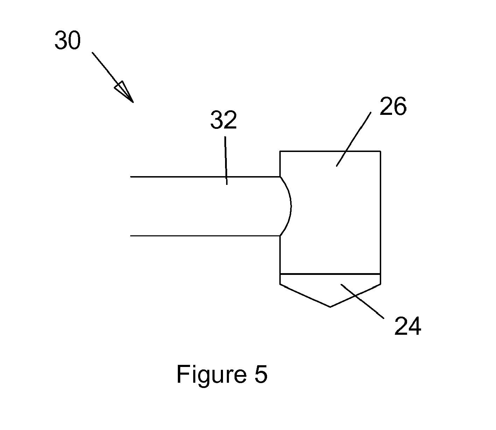

In the embodiment illustrated each foot 24, 24' is provided on the underside of a corresponding leg 26. In the embodiment illustrated each foot 24, 24' is defined by an underside of the respective leg 26, although it will be appreciated that one or more of the feet 24, 24' may be provided as a components separate from the respective leg 26 and optionally articulated relative thereto. In addition one or more of the feet 24, 24' may include one or more spikes or other ground engaging or penetrating features (not shown) to reduce or eliminate unintended sliding displacement of the base 14 along the seabed or other underwater substrate, for example as illustrated in Figure 5.

In the embodiment illustrated the base 14 comprises a main frame 28 comprising a triangular arrangement of the frame members 20 and including a pair of the legs 26, at an underside of each of which is one of the fixed feet 24'. The base 14 further comprises a sub frame 30 comprising a cross member 32 provided at either end of which is one of the legs 26, the underside of each of which defines one of the displaceable feet 24. The sub frame 30 is pivotally or otherwise mounted to the main frame 28, in order to be displaceable relative to the main frame 28, whether through rotation, translation, or a combination thereof. In the preferred embodiment the sub frame 28 is pivotally mounted on a stub axle 34 projecting from an apex of the main frame 28. One or more bearings (not shown) may be provided between the sub frame 30 and main frame 28 in order to reduce friction during relative displacement. The sub frame 30, in the embodiment illustrated, is rotatable about an axis, as defined by the stub axle 34, which extends substantially perpendicular to an axis of rotation of the turbine 12 when mounted to the base 14. It will however be appreciated that the axis displacement of the sub frame 30 may be disposed at any other suitable or desired orientation.

While it is beneficial to permit the above described displacement of the pair of feet 24 relative to the remainder of the base 14, it is preferable to limit the extent of the displacement in order to ensure that the overall system 10 will remain stable once deployed on the seabed. The base 14 may therefore be provided with a restrictor 36 operable to limit the range of movement, in particular rotation, of the sub frame 30 relative to the main frame 28. While the restrictor 36 may take any suitable form, in the embodiment illustrated the restrictor 36 is in the form of a pair of opposed mechanical stops 38 between which the cross member 32 is captured, and which have a multi faceted surface against which the cross member 32 may come into register as the sub frame 30 rotates from the horizontal position in one or other direction. The stops 38 may be designed to provide a desired range of acceptable displacement, through rotation, of the sub frame 30.

It is also envisaged that the restrictor 36 could be in the form of a curable component which sets after a predetermined period of time in order to immobilise the sub frame 30 relative to the main frame 28. Thus for example said curable component (not shown) may be designed to allow the system 10 to be deployed onto the seabed or other underwater deployment substrate, whereby the sub frame 30 will undergo rotational displacement relative to the main frame 28 until all four feet 24, 24' are in contact with the seabed. At this point the curable component will set, immobilising the sub frame 30 relative to the main frame 28, in order to provide a rigid connection between the two while ensuring that all four of the feet 24, 24' have been allowed to fully contact the seabed and thus fully support the system 10.

It should also be understood that while relative displacement between the main frame 28 and the sub frame 30 is facilitated by the provision of a pivot defined by the stub axle 34, any other suitable arrangement or design may be employed which permits displacement of one or more of the feet 24 relative to the remainder of the base 14, in particular the fixed feet 24'. For example it is envisaged that a deformable element may be provided between the main frame 28 and the sub frame 30, and could for example be formed integrally with either of both said components, which deformable element may be designed to undergo plastic or elastic deformation such as to permit the sub frame 30 to be displaced relative to the main frame 28. Similarly the stub axle 34 could be omitted such that a fixed or non articulated connection exists between the main frame 28 and the sub frame 30. In such an arrangement the cross member 32, or portions thereof, may be plastically or elastically deformable in order to permit displacement of one or both of the feet 24 relative to the remainder of the base 14.

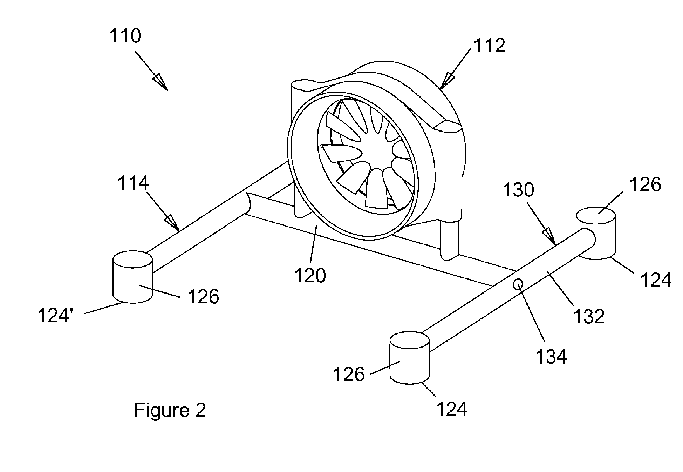

Referring now to Figure 2 there is illustrated a hydroelectric turbine system according to an alternative embodiment of the present invention, and generally indicated as 110. In this alternative embodiment like components have been accorded like reference numerals and unless otherwise stated perform a like function. The system 110 comprises a turbine 112 supported on a base 114 which is formed from a plurality of frame members 120, the base 114 further comprising four legs 126 at the free end of each of which is a foot 124, 124'. The base 114 comprises a main frame 128 consisting of two of the frame members 120 in a T-shaped configuration, and a sub frame 130 which comprises a cross member 132 at either end of which is provided one of the legs 126. The sub frame 130 is arranged to undergo rotational displacement relative to the main frame 128 by means of a coupling 134. Unlike the embodiment illustrated in Figure 1 the system 110 of Figure 2 is designed such that the sub frame 130 is displaceable about an axis which extends substantially perpendicular to an axis of rotation of the turbine 112 during operation. The system 110 nevertheless embodies the same functionality, allowing one and preferably a pair of the feet 124 to be displaced relative to the remainder of the base 114, such as to ensure that all four of the feet 124, 124' contact the seabed and therefore bear the load of the system 110 during use.

The system 10, 110 of the present invention therefore provides a means of designing a base 14, 114 on which a turbine or other components may be support, and which base 14, 114 has four ground contacting feet 24, 24', 124, 124' which will automatically all contact the seabed in order to provide improved load bearing and stability, while enabling the base 14, 114 to be used in the capacity of a gravity base which does not require pre or post deployment site preparation. This provides significant improvements in stability over a tripod or three legged base (not shown), which is more susceptible to sliding displacement along the seabed due to the reduced number of legs, overturning, in particular in the presence of "off axis" effects, and the general instability of a three legged arrangement.

## Claims

1. An adaptive hydroelectric turbine system comprising a base comprising four ground contacting feet; **characterised in that** at least one of the feet is displaceable relative to the base.

2. An adaptive hydroelectric turbine system according to claim 1 in which displacement of the at least one foot is in the form of rotation and/or translation of the foot relative to the base.

3. An adaptive hydroelectric turbine system according to claim 1 or 2 in which displacement of the at least one foot is facilitated by a coupling about which the at least one foot is displaceable.

4. An adaptive hydroelectric turbine system according to claim 3 in which the coupling comprises a pivot.

5. An adaptive hydroelectric turbine system according to claim 3 in which the coupling comprises a pivotless flexible member.

6. An adaptive hydroelectric turbine system according to claim 5 in which the coupling is operable to undergo plastic deformation in order to facilitate the displacement of the at least one foot.

7. An adaptive hydroelectric turbine system according to any of claims 3 to 6 in which the coupling is adapted to generate a reaction moment responsive to displacement of the at least one foot relative to the base.

8. An adaptive hydroelectric turbine system according to any of claims 3 to 7 in which the coupling is adapted to temporarily enable displacement of the at least one foot relative to the base.

9. An adaptive hydroelectric turbine system according to any of claims 3 to 8 comprising an immobiliser adapted to allow the at least one displaceable foot to be immobilised relative to the base.

10. An adaptive hydroelectric turbine system according to claim 9 in which the immobiliser is defined by the coupling.

11. An adaptive hydroelectric turbine system according to claim 9 or 10 in which the immobiliser comprises a curable component.

12. An adaptive hydroelectric turbine system according to any preceding claim in which a pair of feet are displaceable relative to the base while being fixed relative to one another.

13. An adaptive hydroelectric turbine system according to any preceding claim in which the base comprises a main frame on which at least a pair of the feet are provided, and a subframe on which the at least one displaceable foot is provided, the subframe being displaceable relative to the main frame.

14. An adaptive hydroelectric turbine system according to claim 13 in which the subframe is displaceable about an axis which extends substantially perpendicular to an axis of rotation of a hydroelectric turbine when mounted to the base.

15. An adaptive hydroelectric turbine system according to claim 13 in which the subframe is displaceable about an axis which extends substantially parallel to an axis of rotation of a hydroelectric turbine when mounted to the base.

16. An adaptive hydroelectric turbine system according to any of claims 13 to 15 in which the subframe comprises a cross member pivotably mounted to the main frame and from which subframe the at least one displaceable foot extends.

17. An adaptive hydroelectric turbine system according to any preceding claim in which the base comprises four legs, a free end of each leg being defined by one of the ground contacting feet.

18. An adaptive hydroelectric turbine system according to any preceding claim comprising a restrictor operable to limit the range of movement of the at least one foot relative to the base.

19. An adaptive hydroelectric turbine system according to claim 18 in which the restrictor is adapted to limit rotational displacement of the at least one foot.

20. A method of deploying a hydroelectric turbine system on a non uniform underwater surface, the method comprising the steps of:
lowering a base onto the underwater surface, the base having four ground contacting feet;
permitting at least one of the feet to be displaced relative to the base such that all of the feet contact the underwater surface.

21. A method according to claim 20 comprising, in the step of permitting displacement of at least one of the feet, permitting the at least one foot to rotate about an axis.

22. A method according to claim 20 or 21 comprising temporarily permitting displacement of at least one of the feet.

23. A method according to any of claims 20 to 22 comprising the step of immobilising the at least one displaceable foot, relative to the base, following contact of all of the feet with the underwater surface.

24. A method according to claim 23 comprising the step of permitting a curable component to set such as to immobilise the at least one displaceable foot.
